(19) Europäisches Patentamt
European Patent Office
Office européen des brevets

(11) EP 2 607 240 A2

(12) EUROPEAN PATENT APPLICATION

(43) Date of publication:
26.06.2013 Bulletin 2013/26

(51) Int Cl.:
$B64G\ 1/64$ (2006.01)

(21) Application number: 12196840.8

(22) Date of filing: 12.12.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 20.12.2011 US 201113331512

(71) Applicant: Honeywell International Inc.
Morristown, NJ 07962-2245 (US)

(72) Inventors:
• Davis, Porter
Morristown, NJ New Jersey 07962-2245 (US)
• Hadden, Steven
Morristown, NJ New Jersey 07962-2245 (US)
• Bandera, Pablo
Morristown, NJ New Jersey 07962-2245 (US)

(74) Representative: Houghton, Mark Phillip
Patent Outsourcing Limited
1 King Street
Bakewell, Derbyshire DE45 1DZ (GB)

(54) **Passive isolation devices providing low frequency damping of low mass payloads and spacecraft isolation systems employing the same**

(57) Embodiments of a low frequency isolation device (16, 40) are provided, as are embodiments of a spacecraft isolation system (10) including a plurality of low frequency isolation devices (16, 40). In one embodiment, the low frequency isolation device (16, 40) includes a three parameter isolator (36) and a break frequency-reducing series spring (38, 44) mechanically coupled in series with the three parameter isolator (36) and having a predetermined axial stiffness ($K_{S\ AXIAL}$) and a predetermined lateral stiffness ($K_{S\ LATERAL}$). The predetermined axial stiffness ($K_{S\ AXIAL}$) of the break frequency-reducing series spring (38, 44) is less than the predetermined lateral stiffness ($K_{S\ LATERAL}$) thereof.

FIG. 5

**Description**

TECHNICAL FIELD

The present invention relates generally to spacecraft isolation systems and, more particularly, to passive isolation devices well-suited for damping low frequency vibrations transmitted from a spacecraft to a low mass payload.

BACKGROUND

Control moment gyroscope arrays, reaction wheel arrays, and other such devices deployed onboard spacecraft for attitude adjustment purposes generate vibratory forces during operation. Vibration isolation systems are commonly employed to minimize the transmission of vibratory forces emitted from such attitude adjustment devices, through the spacecraft body, to any vibration-sensitive components (e.g., optical payloads) carried by the spacecraft. Vibration isolation systems commonly include a number of individual vibration isolators (typically three to eight isolators), which are positioned between the spacecraft payload and the spacecraft body in a multi-point mounting arrangement. The performance of a vibration isolation systems is largely determined by the number of isolators included within the system, the manner in which the isolators are arranged, and the vibration attenuation characteristics of each individual isolator. Vibration isolation system employing three parameter isolators, which behave mechanically as a primary spring in parallel with a series-coupled secondary spring and damper, provide superior attenuation of high frequency vibratory forces (commonly referred to as "jitter") as compared to vibration isolation systems employing other types of passive isolators (e.g., viscoelastic isolators). An example of a three parameter isolator is the D-STRUT® isolator developed and commercially marketed by Honeywell, Inc., currently headquartered in Morristown, New Jersey.

A recent demand has developed for spacecraft isolation systems capable of isolating low mass payloads from low frequency vibrations, such as vibrations approaching or falling below one hertz (referred to herein as "sub-hertz vibrations"). Such low mass payloads may include, for example, laser communication systems and other optical communication devices weighing only a few pounds when grounded. It is particularly difficult, and has been widely regarded as impractical, to design a lightweight, compact, and passive isolator suitable for usage within a spacecraft isolation system that is sufficiently compliant in an axial direction (i.e., along the isolator's working axis) to provide low frequency damping of such low mass payloads, while also being relatively stiff in radial directions to maintain the overall lateral integrity of the isolator. For example, in the case of a three parameter isolator including a fluid-containing bellows, the isolator break frequency may be favorably lowered, within certain limits, by reducing the wall thickness of the bellows to increase the bellows' axial compliance. However, to provide sub-hertz damping of low mass payloads, an extremely thin-walled bellows may be required (e.g., a bellows having a wall thickness on the order of a few thousands of an inch) thereby rendering the bellows highly difficult to manufacture and unable withstand mission requirements. Furthermore, while it may be possible to design active isolation systems that effectively isolate low mass payloads from sub-hertz vibrations, active isolation systems require additional components (e.g., controllers, power sources, actuators, and the like), which add undesired bulk, weight, complexity, and cost to the isolation system.

It is thus desirable to provide embodiments of low frequency isolation device suitable for employment within a spacecraft isolation system capable of damping vibrations transmitted from a spacecraft to a low mass payload at relatively low (e.g., sub-hertz) frequencies. Ideally, embodiments of such a low frequency isolation device would be compact and lightweight and would permit independent tuning of axial and lateral stiffnesses and damping characteristics. It would also be desirable if embodiments of such a low frequency precision isolation device were passive and included few, in any, sliding components to minimize or eliminate friction. Other desirable features and characteristics of embodiments of the present invention will become apparent from the subsequent Detailed Description and the appended Claims, taken in conjunction with the accompanying drawings and the foregoing Background.

BRIEF SUMMARY

Embodiments of a low frequency isolation device are provided. In one embodiment, the low frequency isolation device includes a three parameter isolator and a break frequency-reducing series spring mechanically coupled in series with the three parameter isolator and having a predetermined axial stiffness ($K_{S\ AXIAL}$) and a predetermined lateral stiffness ($K_{S\ LATERAL}$). The predetermined axial stiffness ($K_{S\ AXIAL}$) of the break frequency-reducing series spring is less than the predetermined lateral stiffness ($K_{S\ LATERAL}$) thereof.

Embodiments of a spacecraft isolation system are further provided for isolating a payload carried by a spacecraft. In one embodiment, the spacecraft isolation system includes a plurality of low frequency vibration isolators and plurality of payload attachment pieces, which are coupled to the plurality of low frequency isolation devices and configured to join the plurality of low frequency isolation devices to the payload in a multi-point mounting arrangement. Each low frequency isolation device includes a three parameter isolator and a break frequency-reducing series spring mechanically coupled in series with the three parameter isolator and having a predetermined axial stiffness ($K_{S\ AXIAL}$) and a predetermined lateral stiffness ($K_{S\ LATERAL}$). The predetermined axial stiffness ($K_{S\ AXIAL}$) of the break frequency-reducing series spring is less than the predetermined lateral stiffness ($K_{S\ LATERAL}$) thereof.

BRIEF DESCRIPTION OF THE DRAWINGS

At least one example of the present invention will hereinafter be described in conjunction with the following figures, wherein like numerals denote like elements, and:

FIG. 1 is simplified schematic of a spacecraft isolation system employing eight low frequency isolation devices suitable for isolating a low mass payload from low frequency vibrations in six degrees of freedom in accordance with an exemplary embodiment of the present invention;

FIG. 2 is a schematic of an exemplary three parameter vibration isolator illustrated in accordance with the teachings of prior art;

FIG. 3 is a transmissibility plot of frequency (horizontal axis) versus gain (vertical axis) illustrating the transmissibility profile of the three parameter isolator shown in FIG. 2 as compared to the transmissibility profiles of a two parameter isolator and an undamped device;

FIG. 4 is a schematic of an exemplary low frequency isolation device suitable for usage as one or all of the isolation devices shown in FIG. 1;

FIG. 5 is a simplified cross-sectional view of a low frequency isolation device suitable for inclusion within the spacecraft isolation system shown in FIG. 1 and illustrated in accordance with a further exemplary embodiment of the present invention; and

FIG. 6 is a top-down view of an exemplary diaphragm spring that may be employed within the low frequency isolation device shown in FIG. 5.

DETAILED DESCRIPTION

The following Detailed Description is merely exemplary in nature and is not intended to limit the invention or the application and uses of the invention. Furthermore, there is no intention to be bound by any theory presented in the preceding Background or the following Detailed Description.

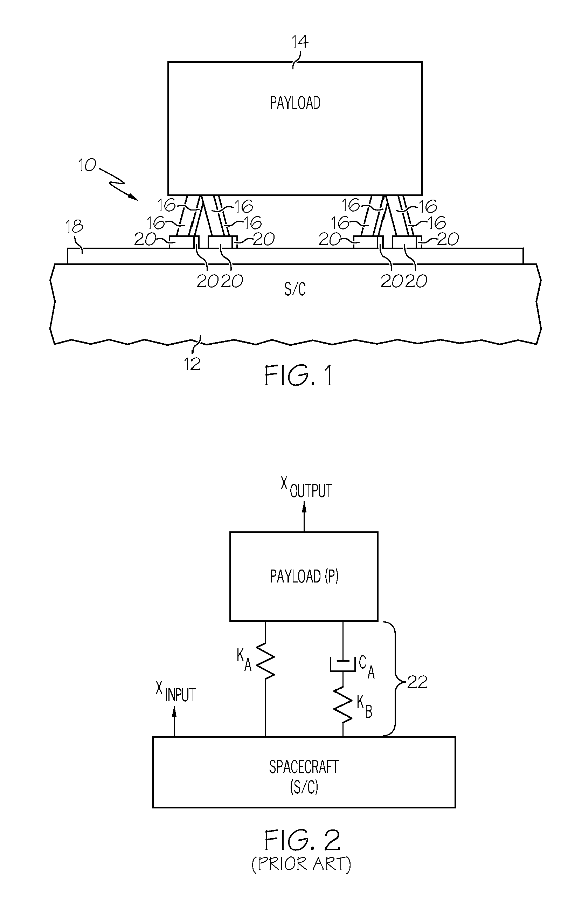

FIG. 1 is simplified schematic of a spacecraft isolation system **10** illustrated in accordance with an exemplary embodiment of the present invention and well-suited for reducing the transmission of vibrations from a spacecraft **12,** such as a satellite, to a low mass payload **14** carried by spacecraft **12.** Isolation system **10** includes a plurality of low frequency isolation devices **16,** which are mechanically coupled to and collectively support payload **14.** The opposing ends of low frequency isolation devices **16** are mounted to a spacecraft mounting interface **18** utilizing a plurality of mounting brackets **20.** Low frequency isolation devices **16** are single degree-of-freedom dampers, which each provide damping in an axial direction. Low frequency isolation devices **16** are positioned in a multi-point mounting arrangement. In this particular example, isolation system **10** includes eight isolation devices **16,** which are positioned in an octopod mounting arrangement to provide high fidelity damping in six degrees of freedom ("6-DOF"). In further embodiments, isolation system **10** may include a lesser number or a greater number of isolation devices, which may be positioned in other mounting arrangements. For example, in an alternative embodiment, isolation system **10** may include six low frequency isolation devices **16** positioned in a hexapod or Stewart platform-type mounting arrangement.

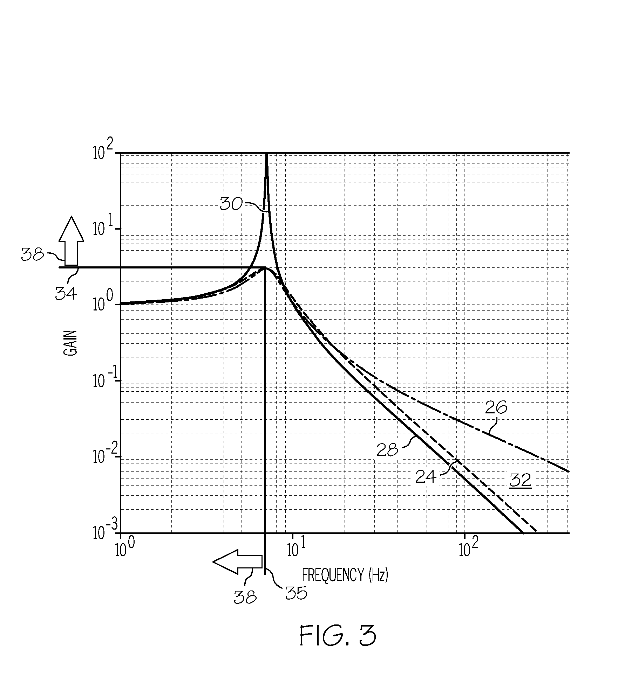

Low mass payload **14** may assume the form of any vibration-sensitive component, such as an optical payload or sensor suite, having a relatively low grounded or non-space-borne weight; e.g., low mass payload **14** may weigh less than about 20 pounds and possibly less than about 5 pounds when grounded. By comparison, many other types of payloads (e.g., reactions wheel and control moment gyroscope arrays) have weights well-exceeding 100 pounds when grounded. In one specific embodiment, low mass payload **14** is a laser communication system suitable for interplanetary communication. Due to the low mass of payload **14** and the fine pointing accuracies that may be required to ensure proper operation of payload **14,** it is desirable to isolate payload **14** from low frequency vibrations emitted by or transmitted through spacecraft **12.** It is also desirable that any multi-point isolation system utilized to isolate low mass payload **14** from such vibrations is relatively compact, lightweight, and preferably (although not necessarily) passive in design. As described in the foregoing section entitled "BACKGROUND," three parameter isolators have been developed that provide superior damping performance as compared to other types of passive damping devices, such as viscoelastic elements. However, as described more fully below in conjunction with FIGs. 2 and 3, conventional three parameter isolators are typically incapable of providing adequate vibration attenuation at exceptionally low (e.g., sub-hertz) frequencies when utilized to support a low mass payload, such as payload **14** shown in FIG. 1.

FIG. 2 is a schematic representation of an exemplary three parameter isolator **22** mechanically coupled between a payload "P" and a spacecraft "S/C" and illustrated in accordance with the teachings of prior art. As modeled in FIG. 2, three parameter isolator **22** includes the following mechanical elements or components: (i) a first spring component

$K_A$, which is mechanically coupled between payload P and a host spacecraft S/C; (ii) a second spring component $K_B$, which is mechanically coupled between payload P and spacecraft S/C in parallel with first spring component $K_A$; and (iii) a damper $C_A$, which is mechanically coupled between payload P and spacecraft S/C in parallel with the first spring component $K_A$ and in series with the second spring component $K_B$. Transmissibility of three parameter isolator 22 is expressed by the following equation:

$$T(\omega) = \frac{X_{output}(\omega)}{X_{input}(\omega)} \qquad \text{EQ. 1}$$

wherein $T(\omega)$ is transmissibility, $X_{output}(\omega)$ is the output motion of payload P, and $X_{mput}(\omega)$ is the input motion imparted to isolator **22** by spacecraft S/C.

FIG. 3 is a transmissibility plot illustrating the damping characteristics of three parameter isolator **22** (curve **24**) as compared to a two parameter isolator (curve **26**) and an undamped device (curve **28**). As indicated in FIG. 3 at **30,** the undamped device (curve **28**) provides an undesirably high peak gain at a threshold frequency, which, in the illustrated example, is moderately less than 10 hertz. By comparison, the two parameter device (curve **26**) provides a significantly lower peak gain at the peak frequency, but an undesirably gradual decrease in gain with increasing frequency after the threshold frequency has been surpassed (referred to as "roll-off"). In the illustrated example, the roll-off of the two parameter device (curve **26**) is approximately 20 decibel per decade ("dB/decade"). Lastly, the three parameter device (curve **24**) provides a low peak gain substantially equivalent to that achieved by the two parameter device (curve **26**), as indicated in FIG. 3 by horizontal line **34,** and further provides a relatively steep roll-off of about 40 dB/decade. The three parameter device (curve **24**) thus provides a significantly lower transmissibility at higher frequencies, as quantified in FIG. 3 by the area **32** bounded by curves **24** and **26.** By way of non-limiting example, further discussion of three parameter isolators can be found in U.S. Pat. No. 5,332,070, entitled "THREE PARAMETER VISCOUS DAMPER AND ISOLATOR," issued January 26, 1994; and U.S. Pat. No. 7, 182,188 B2, entitled "ISOLATOR USING EXTERNALLY PRESSURIZED SEALING BELLOWS," issued February 27, 2007; both of which are assigned to assignee of the instant application. As gain decreases with increasing frequency after the threshold frequency has been surpassed for three parameter isolator **22** (curve **24**), as well as for two parameter isolator (curve **26**) and undamped device (curve **28**), the peak damping frequency is commonly referred to (and will be referred to below) as the "break frequency."

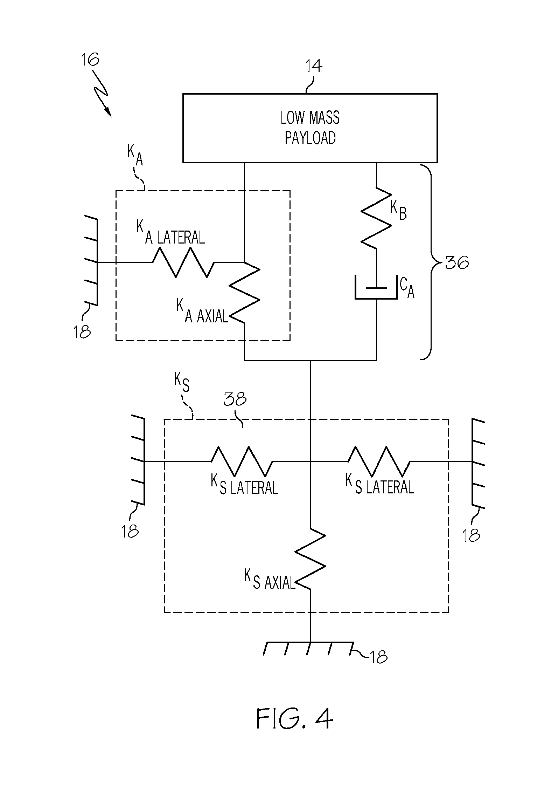

It can be seen in FIG. 3 that, while providing superior damping as compared to the two parameter isolator (curve **26**) and the undamped device (curve **28**), the conventional three parameter isolator **22** (curve **24**) provides relatively little vibration attenuation at frequencies less than the break frequency (represented in FIG. 3 by vertical line **35**). Thus, a 6-DOF isolation system employing three parameter isolator **22** in combination with other like isolators, will be substantially ineffective at isolating a lightweight or low mass payload, such as payload **14** shown in FIG. 1, from low frequency (e.g., sub-hertz) vibrations emitted by or transmitted through the host spacecraft. In contrast to such conventionally-produced three parameter isolators and other passive isolation devices, low frequency isolation devices **16** included within spacecraft isolation system **10** shown in FIG. 1 are each able to effectively attenuate low frequency vibrations transmitted from spacecraft **12** to lightweight payload **14.** As a further advantage, each low frequency isolation device **16** is relatively compact, lightweight, and passive in design. The manner in which low frequency vibration isolators **16** are able to provide attenuation of such low frequency vibratory forces is described more fully below in conjunction with FIG. 4.

FIG. 4 is a schematic representation of a low frequency isolation device **16** included within spacecraft isolation system **10** shown in FIG. 1. As modeled in FIG. 4, three parameter isolator **36** includes the same mechanical elements or components as does conventional three parameter isolator **22** described above in conjunction with FIGs. 2 and 3. More specifically, three parameter isolator **36** includes: (i) a first spring component $K_A$, which is coupled between low mass payload **14** and spacecraft mounting structure **18** of spacecraft **12** (FIG. 1); (ii) a second spring component $K_B$, which is coupled between low mass payload **14** and spacecraft mounting structure **18** in parallel with first spring component $K_A$; and (iii) a damper $C_A$, which is coupled between payload **14** and spacecraft mounting structure **18** in parallel with the first spring component $K_A$ and in series with the second spring component $K_B$. As will be described more fully below, low frequency isolation device **16** is implemented such that the axial stiffness of the first spring component $K_A$ is less, and preferably significantly less, than the first spring component's lateral stiffness, as taken in all radial directions. Thus, for convenience of reference, spring component $K_A$ is further shown in FIG. 4 as having a predetermined lateral stiffness $K_{A\ LATERAL}$ and a predetermined axial stiffness $K_{A\ AXIAL}$.

Spring element **38** is mechanically coupled between low mass payload **14** and spacecraft mounting structure **18** in series with three parameter isolator **36.** As indicated in FIG. 4, spring element **38** can be mechanically coupled between spacecraft mounting structure **18** and an end of three parameter isolator **36** substantially opposite payload **14.**

Alternatively, spring element **38** can be coupled between payload **14** and an end of three parameter isolator **36** substantially opposite spacecraft mounting structure **18**. As will be explained more fully below, spring element **38** serves to decrease the break frequency of isolation device **16**. Spring element **38** is thus referred herein as "break frequency-reducing series spring **38**" or, more simply, as "series spring **38**." As was the case with first spring component $K_A$, and as further schematically represented in FIG. 4, break frequency-reducing series spring **38** has a predetermined axial stiffness ($K_{S\ AXIAL}$) that is less than, and preferably significantly less than the first spring component's lateral stiffness ($K_{S\ LATERAL}$), as taken in all radial directions.

In view of its considerable axial compliance, series spring **38** enables relative movement between the host spacecraft and low mass payload **14** at small axial displacements and low frequencies. At the same time, the relatively high lateral stiffness of series spring **38** prevents isolator buckling to help maintain the lateral integrity of isolation device **16**. It will be appreciated that positioning an axially-soft spring in series with three parameter isolator **36** in this manner will detract from the overall performance of three parameter isolator **36**. The present inventors have determined, however, that three parameter isolator **36** can be designed to still contribute appreciable damping, providing that the axial stiffness of the first spring component ($K_{A\ AXIAL}$) is tuned to be within a certain range of the series spring axial stiffness ($K_{S\ AXIAL}$); e.g., $K_{A\ AXIAL}$ preferably differs from $K_{S\ AXIAL}$ by a factor of less than two and, more preferably, is substantially equivalent to $K_{S\ AXIAL}$. Thus, as indicated in FIG. 3 by arrows **38**, a tradeoff can be realized wherein the break frequency of isolation device **16** is reduced while the overall transmissibility over the operative frequency range is increased. In the case of conventional payloads having moderate to high masses, such a tradeoff may be undesirable. However, in the case of low mass payloads, such as low mass payload **14** shown in FIG. 1, an isolation device taking advantage of such a tradeoff may still provide appreciable damping at sub-hertz frequencies at which conventional three parameter isolators and other passive isolators provide little to no appreciable damping. Thus, when such a low frequency isolation device are combined with other such isolation devices in a multi-point isolation system (e.g., spacecraft isolation system **10** shown in FIG. 1), a low mass payload can be effectively isolated from low frequency vibrations to achieve high precision pointing accuracies that were previously unattainable utilizing conventional passive isolation systems.

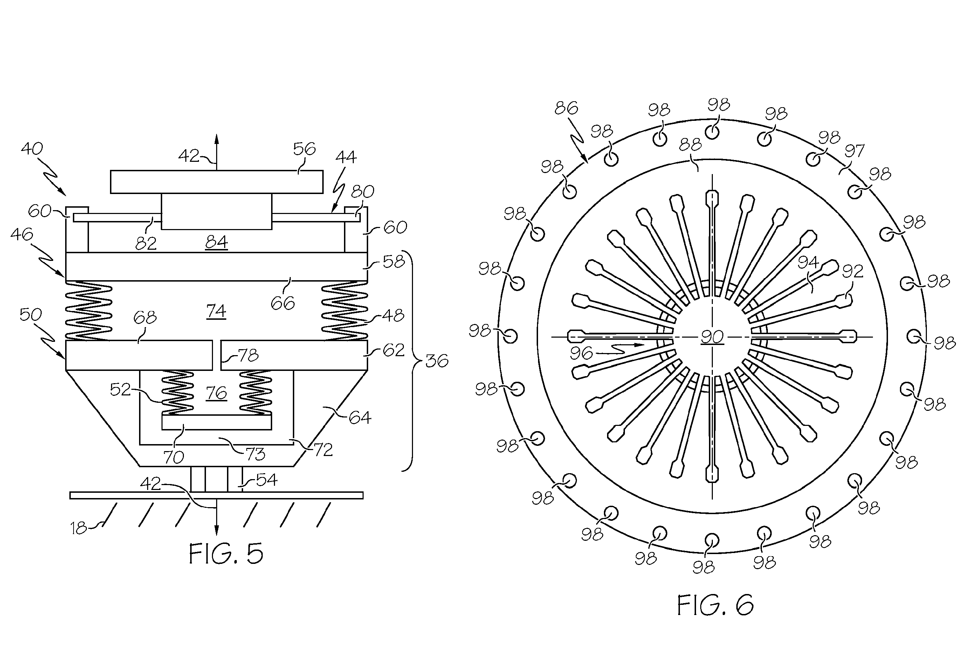

As noted above, series spring **38** has a relatively high lateral stiffness ($K_{S\ LATERAL}$) as compared to the axial stiffness thereof ($K_{S\ AXIAL}$) to prevent isolator buckling and thereby ensure that the lateral integrity of isolation device **16** is maintained. Similarly, first spring component $K_A$ has a predetermined lateral stiffness ($K_{A\ LATERAL}$) that is significantly greater than the axial stiffness ($K_{A\ AXIAL}$) thereof to further prevent isolator buckling. In preferred embodiments, $K_{S\ LATERAL}$ is at least ten times $K_{S\ AXIAL}$, and/or $K_{A\ LATERAL}$ is at least ten times $K_{A\ AXIAL}$. Designing an isolation device having such high lateral-to-axial stiffness ratios, while also imparting the isolation device with a relatively low weight and compact envelope is highly difficult. An exemplary embodiment of one manner in which low frequency isolation device **16** can be structurally implemented in a lightweight and compact package is described below in conjunction with FIGs. 5 and 6.

FIG. 5 is a simplified cross-sectional view of a low frequency isolation device **40**, which is illustrated in accordance with an exemplary embodiment of the present invention and which is suitable for usage as one or all of the low frequency isolation devices **16** included within spacecraft isolation system **10** shown in FIG. 1 and schematically represented in FIG. 4. In the exemplary embodiment shown in FIG. 5, low frequency isolation device **40** includes the following components (from top to bottom): (i) a diaphragm spring **44**, (ii) a spring support structure **46**, (iii) a primary bellows **48**, (iv) a bellows support structure **50**, and (v) a secondary bellows **52**. Low frequency isolation device **40** is mechanically coupled between a payload (e.g., low mass payload **14** shown in FIGs. 1 and 4) and a host spacecraft (e.g., spacecraft **12** shown in FIG. 1) via spacecraft mounting interface **18**. In the illustrated example, specifically, a first end of low frequency isolation device **40** (in particular, a terminal end of bellows support structure **50**) is attached to a spacecraft mounting interface **18** through a pivotal coupling **54** (e.g., a blade flexure); while the second, opposing end of isolation device **40** (in particular, an inner circumferential portion of diaphragm spring **44**) is attached to the non-illustrated low mass payload through a payload attachment piece **56**. This example notwithstanding, the orientation of low frequency isolation device **40** may be inverted in alternative embodiments such that bellows support structure **50** is mechanically coupled most directly to the non-illustrated payload, while diaphragm spring **44** is coupled most directly to the host spacecraft.

Spring support structure **46** includes a bellows plate **58** and an annular lip or rim **60**, which is affixed to bellows plate **58** and which extends axially therefrom toward diaphragm spring **44** and payload attachment piece **56**. Similarly, bellows support structure **46** includes a bellows plate **62** and a base piece **64**, which extends axially from bellows plate **62** away from primary bellows **48**, away from spring support structure **46**, and toward the host spacecraft. For ease of reference, bellows plate **58** and bellows plate **62** will be referred hereafter to as "upper bellows plate **58**" and "lower bellows plate **62**," respectively, due to their exemplary orientation shown in FIG. 5; however, it will be appreciated that the illustrated orientation is arbitrary and is offered by way of non-limiting example only. Primary bellows **48** is sealingly joined between upper bellows plate **58** and lower bellows plate **62**. For example, as shown in FIG. 5, a first end of primary bellows **48** (the upper end of bellows **48** in the illustrated orientation) may be joined to an outer annular region of the inner radial face **66** of upper bellows plate **58**; while the second, opposing end of bellows **48** (the lower end of bellows **48** in the illustrated orientation) may be joined to an outer annular region of the inner radial face **68** of inner bellows plate **58**.

A first end of secondary bellows **52** (the upper end of bellows **52** in the illustrated orientation) is sealingly joined to lower bellow plate **62** substantially opposite primary bellows **48;** while the second, opposing end of secondary bellows (the lower end of bellows **52** in the illustrated orientation) is sealingly joined to a free-floating end plate **70.** Secondary bellows **52** and primary bellows **48** are thus partitioned or separated by intervening bellows plate **62** of bellows support structure **50.** Secondary bellows **52** may be at least partially surrounded by axially-extending base piece **64** of bellows support structure **50.** For example, as shown in FIG. 5, secondary bellows **52** may be received within a cavity **72** provided within axially-extending base piece **64,** while an axial clearance **73** is provided between the interior of base piece **64** defining cavity **72** and end plate **70** to accommodate expansion of bellows **52.** Bellows **48** and **52** are substantially co-axial with one another and with the working axis **42** of low frequency isolation device **50.** Bellows **48** and **52** are conveniently, although not necessarily, fabricated from a high temperature metal or alloy. Bellows **48** and **52** can be joined to the above-listed components of isolation device **40** utilizing any technique or means suitable for forming a fluid-tight or hermetic seal including, for example, a circumferential welding or bonding technique. Although internally pressurized in the exemplary embodiment shown in FIG. 5, bellows **48** and 52 can be externally pressurized in further embodiments.

Primary bellows **48,** upper bellows plate **58,** and lower bellows plate **62** define a first variable hydraulic chamber **74** within low frequency isolation device **16;** while secondary bellows **52,** lower bellows plate **62,** and free-floating end plate **70** define a second variable hydraulic chamber **76.** Prior to operation of low frequency isolation device **16,** hydraulic chambers **74** and **76** are filled with a damping fluid, such as a silicone-based liquid. A fill port (not shown) may be provided through upper bellows plate **58,** lower bellows plate **62,** or end plate **70** to enable hydraulic chambers **74** and **76** to be filled with damping fluid after assembly of isolation device **16.** After filling of hydraulic chambers **74** and **76,** the fill port may be permanently sealed by, for example, deforming a sealing element (e.g., a copper ball) positioned within the fill port flow passage. If desired, low frequency isolation device **16** may also be equipped with a thermal compensation port, such as a spring loaded piston (not shown), in fluid communication with hydraulic chambers **74** and **76.** A damping fluid annulus **78** is provided through lower bellows plate **62** to permit fluid communication between hydraulic chambers **74** and **76** and, specifically, to permit the exchange of damping fluid between hydraulic chambers **74** and **76** as primary bellows **48** expands and contracts in conjunction with relative axial movement of support structures **46** and **50** (described below). As appearing herein, the term "damping fluid annulus" denotes any opening, orifice, or flow passage through which damping fluid may flow between at least two hydraulic chambers.

An outer circumferential portion **80** of diaphragm spring **44** is affixed to rim **60,** and an inner circumferential portion **82** of diaphragm spring **44** is affixed to payload attachment piece **56.** Diaphragm spring **44** may be affixed to rim **60** and payload attachment piece **56** utilizing any suitable joinder technique (e.g., welding) or hardware (e.g., a plurality of bolts or other such fasteners). Diaphragm spring **44** thus extends radially inward from rim **60** toward working axis **42** to be joined to payload attachment piece **56.** Rim **60** can be an axially-extending annular structure (e.g., a continuous circular ridge) or group of structures (e.g., a plurality of angularly spaced protrusions or castellations) to which an outer circumferential portion **80** of diaphragm spring **44** can be secured. Rim **60** defines a cavity or recess **84** within spring support structure **46,** which provides a sufficient axial and radial clearances to ensure that contact does not occur between bellows plate **58** and payload attachment piece **56** during deflection of diaphragm spring **44.**

FIG. 6 is a top-down view of diaphragm spring **44** in accordance with an exemplary embodiment. Diaphragm spring **44** includes central disc-shaped body **88** having a central opening **90** and a plurality of radial slits **92** (only one of which is labeled in FIG. 6). Radial slits **92** collectively define a plurality of elongated, tapered fingers **94** (again, only one of which is labeled in FIG. 6), which extend radially inward toward a central portion **96** of spring body **88** to promote axial deflection of spring body **88** and, specifically, axial displacement of central portion **96** of body **88** relative to the outer circumferential portion thereof. In so doing, radial fingers **94** impart diaphragm spring **44** with a predetermined axial stiffness, which is significantly less than the lateral stiffness of spring **86.** The outer diameter of diaphragm spring **44** is closer to the outer diameter of primary bellows **48** than to the outer diameter of secondary bellows **52;** e.g., in one embodiment, the outer diameter of diaphragm spring **44** may be substantially equivalent to the outer diameter of primary bellows **48.** Such a structural configuration enables diaphragm spring **44** to axially deflect under low frequency conditions, while preserving the lateral integrity of low frequency isolation device **40.** To facilitate attachment of diaphragm spring **44** to axially-extending rim **60** of spring support structure **46,** diaphragm spring **44** may also be fabricated to include an outer circumferential flange **97** through which a plurality of fastener openings **98** are provided. The foregoing notwithstanding, any pattern or design can be created within the spring body (e.g., a spiral pattern) suitable for imparting the diaphragm spring with the above-described characteristics.

In the illustrated example, and referring once again to FIG. 5, spring support structure **46** and bellows support structure **50** are joined solely or exclusively by primary bellows **48.** Consequently, spring support structure **46** and bellows support structure 50 are permitted to move relative to one another (i.e., axially converge or diverge) along working axis **42** with deflection of primary bellows **48.** Primary bellows **48** thus compresses and expands to accommodate relative movement between bellows support structure **50** and spring support structure **46.** Secondary bellows **52** compresses and expands, as needed, to receive damping fluid from and supply damping fluid to primary bellows **48** through damping fluid annulus **78.** Damping is provided by viscous fluid losses as damping fluid is forced through annulus **78.** Collectively, bellows **48,** bellows **52,** annulus **78,** hydraulic chambers **74** and **76** and the damping fluid contained therein, spring support structure **46,** and spring support structure **50** function as three parameter isolator **36** wherein: $K_A$ is generally determined by primary bellows **48;** $K_B$ is generally determined by the volumetric stiffness of the previously-listed components; and $C_A$ is generally determined by the damper rate of damper formed by bellows **48,** bellows **52,** annulus **78,** hydraulic chambers **74** and **76** and the damping fluid contained therein. Furthermore, in keeping with the terminology above and the exemplary schematic shown in FIG. 4, $K_{A\ LATERAL}$ and $K_{A\ AXIAL}$ are determined by the lateral and axial stiffnesses, respectively, of primary bellows **48.**

As noted above, $K_{A\ LATERAL}$ is selected to be greater than and, preferably, at least ten times $K_{A\ AXIAL}$. In the exemplary structural implementation shown in FIG. 5, this is accomplished, at least in part, by imparting primary bellows **48** with a large outer diameter by sealingly coupling the opposing circumferential edges of bellows **48** to the outer annular regions of the inner faces of bellows plates **58** and **62.** In general, it is preferred that the outer diameter of primary bellows **48** is greater than at least one half of the maximum outer diameter of low frequency isolation device **40** and, more preferably, substantially equivalent to the maximum outer of isolation device **40.** As appearing herein, the term "substantially equivalent" denotes a disparity in magnitude of less than about 10%. In further embodiments, the outer diameter of bellows **48** is substantially equivalent to the outer diameter of bellows plate **58** and/or bellows plate **62.** Notably, $K_{A\ LATERAL}$ and $K_{A\ AXIAL}$ can be tuned, within certain limits, by adjusting the lateral and axial stiffnesses of primary bellows **48,** respectively, through modifications in dimensions (e.g., wall thickness and outer diameter), materials, and other parameters. The damper rate $C_A$ of three parameter isolator **36** can also be independently tuned by altering the dimensions of hydraulic chambers **74** and **76,** the dimensions and/or number of damping fluid annuli **78,** the damping fluid composition, and so on.

In the exemplary embodiment shown in FIG. 5, diaphragm spring **44** serves as break frequency-reducing series spring **38** schematically shown in FIG. 4; that is, diaphragm spring **44** is mechanically coupled in series with the three parameter isolator **36,** while having an axial compliancy sufficient to reduce the break frequency of isolation device **40** as previously described. Diaphragm spring **44** also has a relatively high lateral stiffness ($K_{S\ LATERAL}$) to preserve the overall lateral integrity of isolation device **40.** As may be appreciated by referring to FIGs. 5 and 6, diaphragm spring **44** is imparted with such a high lateral-to-axial stiffness ratio in view of its axially-thin, radially-elongated form; its orthogonal disposition with respect to working axis **42;** and its spring pattern or design formed by cut-outs or other such openings. Notably, the lateral stiffness ($K_{S\ LATERAL}$) and axial stiffness ($K_{S\ AXIAL}$) of series spring **44** can also be tuned by adjusting the axial thickness of spring **44,** the spring design (e.g., the number, dimension, and pattern of cut-outs), and the like. The foregoing notwithstanding, it is emphasized that other resilient elements or groupings and assemblages of elements can be employed as the break frequency-reducing spring in alternative embodiments, providing that such resilient element(s) are positioned around working axis of the isolation device and characterized by a relatively high radial-to-axial stiffness ratio. For example, in further embodiments, the break frequency-reducing series spring may assume the form of a plurality of (e.g., three to four) elongated flexures or beams angularly spaced about working axis of the isolation device and extending radially outward therefrom in, for example, a star flexure configuration. Diaphragm spring **44** and primary bellows **48** also preferably each have a relatively high torsional stiffness to prevent undesired twisting of low frequency isolation device **40** about working axis **42.**

The foregoing has thus provided embodiments of low frequency isolation device suitable for employment within a spacecraft isolation system and capable of damping vibrations transmitted from a spacecraft to a low mass payload at relatively low (e.g., sub-hertz) frequencies. Advantageously, embodiments of the above-described low frequency isolation device are compact and lightweight; are frictionless (i.e., lack sliding parts); and enable the axial and lateral stiffnesses and damping characteristics of the isolation device to be independently tuned. Furthermore, the above-described exemplary low frequency isolation devices are passive and consequently do not require the additional structural components required by active damping systems. This notwithstanding, in instances wherein it is acceptable to increase system complexity, part count, and cost, the damping performance of embodiments of the above-described spacecraft isolation system can be improved by further pairing embodiments of the low frequency isolation device with known active control systems, such as voice coils.

While at least one exemplary embodiment has been presented in the foregoing Detailed Description, it should be appreciated that a vast number of variations exist. It should also be appreciated that the exemplary embodiment or exemplary embodiments are only examples, and are not intended to limit the scope, applicability, or configuration of the invention in any way. Rather, the foregoing Detailed Description will provide those skilled in the art with a convenient road map for implementing an exemplary embodiment of the invention. It being understood that various changes may be made in the function and arrangement of elements described in an exemplary embodiment without departing from the scope of the invention as set-forth in the appended claims.

**Claims**

**1.**    A low frequency isolation device (16, 40), comprising:

a three parameter isolator (36); and
a break frequency-reducing series spring (38, 44) mechanically coupled in series with the three parameter isolator (36) and having a predetermined axial stiffness ($K_{S\ AXIAL}$) and a predetermined lateral stiffness ($K_{S\ LATERAL}$), the predetermined axial stiffness ($K_{S\ AXIAL}$) of the break frequency-reducing series spring (38, 44) being less than the predetermined lateral stiffness ($K_{S\ LATERAL}$) thereof.

2. A low frequency isolation device (16, 40) according to Claim 1 wherein the three parameter isolator (36) comprises a primary bellows (48) having predetermined axial stiffness ($K_{A\ AXIAL}$) and a predetermined lateral stiffness ($K_{A\ LATERAL}$), the predetermined axial stiffness ($K_{A\ AXIAL}$) of the primary bellows (48) being less than the predetermined lateral stiffness ($K_{A\ LATERAL}$) thereof.

3. A low frequency isolation device (16, 40) according to Claim 2 wherein the outer diameter of the primary bellows (48) is substantially equivalent to the maximum outer diameter of the low frequency isolation device (16, 40).

4. A low frequency isolation device (16, 40) according to Claim 2 wherein the three parameter isolator (36) further comprises:

a spring support structure (46); and
a bellows support structure (50) movably coupled to the spring support structure (46) through the primary bellows (48).

5. A low frequency isolation device (16, 40) according to Claim 4 wherein the break frequency-reducing series spring (38, 44) is coupled to the spring support structure (46) substantially opposite the primary bellows (48), and wherein an outer circumferential portion (80) of the break frequency-reducing series spring (38, 44) is affixed to the spring support structure (46).

6. A low frequency isolation device (16, 40) according to Claim 4 wherein the bellows support structure (50) comprises a bellows plate (62) to which the primary bellows (48) is sealingly coupled, and wherein the low frequency isolation device (16, 40) further comprises:

a secondary bellows (52) sealingly coupled to the bellows plate (62) substantially opposite the primary bellows (48); and
an annulus (78) formed through the bellows plate (62) fluidly coupling the primary bellows (48) and the secondary bellows (52).

7. A low frequency isolation device (16, 40) according to Claim 2 wherein the predetermined axial stiffness ($K_{S\ AXIAL}$) of the break frequency-reducing series spring (38, 44) is less than twice the predetermined axial stiffness ($K_{A\ AXIAL}$) of the primary bellows (48), wherein the predetermined axial stiffness ($K_{S\ AXIAL}$) of the break frequency-reducing series spring (38, 44) is at least ten times less than the predetermined lateral stiffness ($K_{S\ LATERAL}$) thereof, and wherein the predetermined axial stiffness ($K_{A\ AXIAL}$) of the primary bellows (48) is at least ten times less than the predetermined lateral stiffness ($K_{A\ LATERAL}$) thereof.

8. A low frequency isolation device (16, 40) according to Claim 1 wherein the break frequency-reducing series spring (38, 44) is positioned substantially orthogonal to the working axis (42) of the low frequency isolation device (16, 40).

9. A low frequency isolation device (16, 40) according to Claim 8 wherein the break frequency-reducing series spring (38, 44) comprises a diaphragm spring (44).

10. A spacecraft isolation system (10) suitable for isolating a payload (14) carried by a spacecraft (12), the spacecraft isolation system (10) comprising:

a plurality of low frequency vibration isolators (16, 40), each comprising:

a three parameter isolator (36); and
a break frequency-reducing series spring (38, 44) mechanically coupled in series with the three parameter isolator (36) and having a predetermined axial stiffness ($K_{S\ AXIAL}$) and a predetermined lateral stiffness ($K_{S\ LATERAL}$), the predetermined axial stiffness ($K_{S\ AXIAL}$) of the break frequency-reducing series spring (38, 44) being less than the predetermined lateral stiffness ($K_{S\ LATERAL}$) thereof; and

a plurality of payload attachment pieces (20) coupled to the plurality of low frequency isolation devices (16, 40) and configured to join the plurality of low frequency isolation devices (16, 40) to the payload (14) in a multi-point mounting arrangement.

FIG. 1

FIG. 2
(PRIOR ART)

FIG. 3

FIG. 4

FIG. 5

FIG. 6

EP 2 607 240 A2

13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5332070 A
- US 7182188 B2